# EUROPEAN PATENT SPECIFICATION

(11) **EP 0 799 752 B1**
(45) Date of publication and mention of the grant of the patent: **23.05.2001**
(21) Application number: 97108062.7
(22) Date of filing: 29.11.1993
(51) Int. Cl.: B60R 22/46

(54) **Seat belt retractor with pretensioner**
Sicherheitsgurt-Aufroller mit Gurtstraffer
Rétracteur de ceinture de sécurité comportant un prétensionneur

(30) Priority: 02.12.1992 GB 9225158; 08.01.1993 GB 9300250
(43) Date of publication of application: 08.10.1997
(62) Divisional of application: 93309484.9
(73) Proprietor: BREED Automotive Technology, Inc., Lakeland, Florida 33811 (US)
(72) Inventor: Gordon, Ian Alexander, Carlisle, Cumbria CA2 5PE (GB); Evans, Raymond George, Carlisle, Cumbria CA2 4AS (GB); Armstrong, Stephen, Wigton, Cumbria CA7 9LG (GB)
(74) Representative: Freeman, Jacqueline Carol

(56) References cited:
- EP-A- 0 093 237
- DE-A- 3 430 963

## Description

This invention relates to a seat belt retractor with a pretensioner.

This application is a divisional application of EP-A-93 309 484.8.

In modern passenger vehicle restraint systems it is usual to provide seat belt webbing retractors which allow for payout and rewind of webbing for the purposes of providing a comfortable harness around an occupant. In addition to a light rewinding spring of a clock spring type such retractors are normally provided with emergency locking features whereby more than a predetermined belt acceleration and/or more than a predetermined rate of change of vehicle speed or webbing pull out speed results in positive locking of the retractor early in a crash sequence. It has also been proposed to provide such retractors with a pyrotechnic device which is detonated to almost instantaneously rewind up to a predetermined length of belt webbing in the early stages of a crash. Such action is known as pretensioning and is intended to further reduce the possible forward motion of an occupant during a crash to reduce injury due to impact with parts of the interior of the vehicle such as the steering wheel or facia panel.

There is known a retractor according to the precharacterising clause of claim 1. Such a retractor is described in DE-A- 34 30963 and also in EP-A- 093 237 which suggests a screw fitting for one end of the cylinder.

According to the present invention there is further provided a seat belt retractor according to the characterising clause of claim 1.

Preferably one end of the cylinder is sealed and the other end is formed of a vented end cap.

In order that the invention may be more clearly understood and readily carried into effect the same will now be further described by way of an example with reference to the accompanying drawings in which:
Figure 1 is an exploded fragmental view of components of a seat belt retractor assembly;
Figure 2 is a sectional fragmental view of the assembly;
Figure 3 is a part-sectional diagrammatic view of an actuator used in the assembly of Figure 2;
Figure 4 is a partly cut-away diagrammatic view of the retractor and a piston incorporating a pyrotechnic device.

The retractor in general comprises a generally U-shaped steel frame (not shown) the sides of which carry bearings supporting a webbing reel. On the exterior of one side of the frame there is provided a mechanism which senses the occurrence of excessive webbing pull-off acceleration or of excessive vehicle deceleration to initiate locking of the reel. Such a retractor is described for example in the specification of European Patent No. 0 170 432. The other side of the frame is equipped with an encaged light spring such as a clock spring for automatically retracting and storing the webbing of the seat belt on the reel when it is released by the occupant.

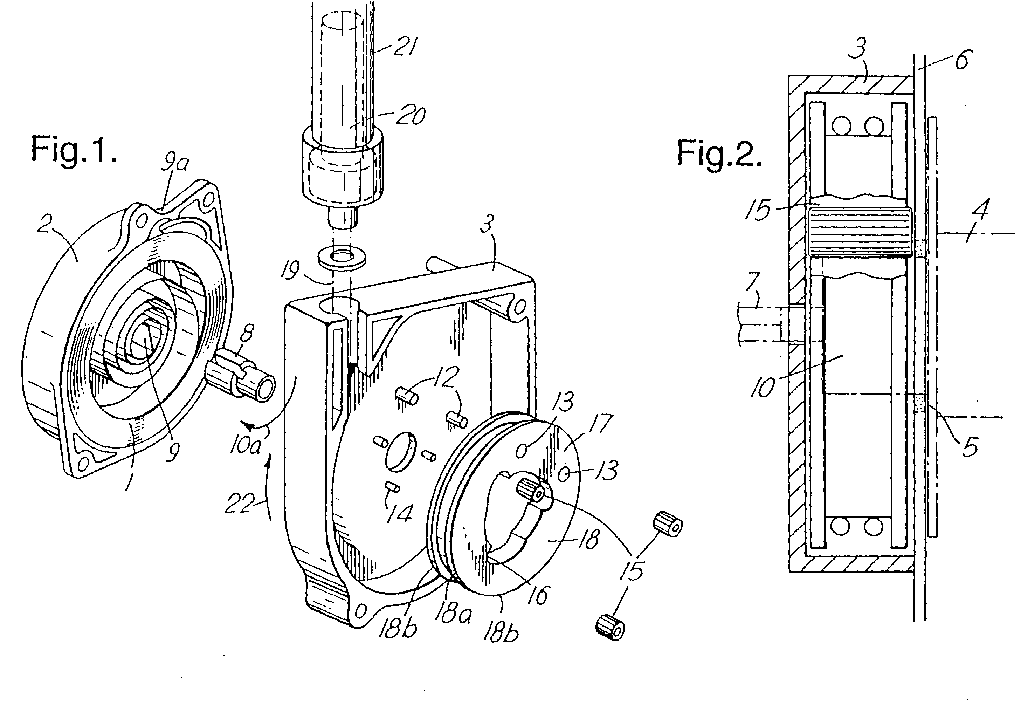

As seen in the exploded view in Figure 1, the engaged spring in the present example is a spring 1 of a clock spring type retained in an end-casing 2 which is mounted on one side of the retractor through the intermediary of a further pretensioner housing 3 additionally shown in diagrammatic sectional view in Figure 2.

In Figure 2, a reel 4 is seen to be carried in bearings such as 5 in the sides such as 6 of the U-shaped steel frame. The reel 4 has a smaller diameter cylindrical part 10 fixedly mounted on the shaft thereof extending into the intermediate housing 3. The outer end 7 of the reel shaft carried an arbor 8 which is connected to the inner end 9 of the spring 1 and the outer end 9a of the spring is connected to the casing whereby the spring effects rewinding of the seat belt webbing in the direction of arrow 10a.

The intermediate pretensioner housing 3 is of moulded plastic and is provided with two frangible pegs 12 integrally moulded on its interior. These pegs serve to locate in respective apertures 13 of a clutch drum 18 within which the cylindrical part 10 is freely rotatable. Located on 3 are a further three integrally moulded frangible pegs 14 volatably carrying respective equally spaced locking rollers 15 of hard material such as steel which stand clear of and normally permit free rotation of the cylindrical part 10. In the assembled mechanism the rollers 15 are accommodated within internal arcuate indentations 16 of the clutch drum, the outer surfaces 17 of these indentations providing radially inwardly driving action in the event of rotation of drum 18 in the direction of arrow 22.

The periphery of the clutch drum 18 is provided with flanges 18b and an annular pulley surface 18a which received several turns of the lower end of a connecting cable 19, the end being anchored to the drum 18. The connecting cable has its outward end connected to a piston 20 of a pyrotechnic force generator 21 mounted on housing 3. On being detonated the generator 21 can act in a sense to withdraw cable from the housing 3 and rotate drum 18 in the direction of arrow 22.

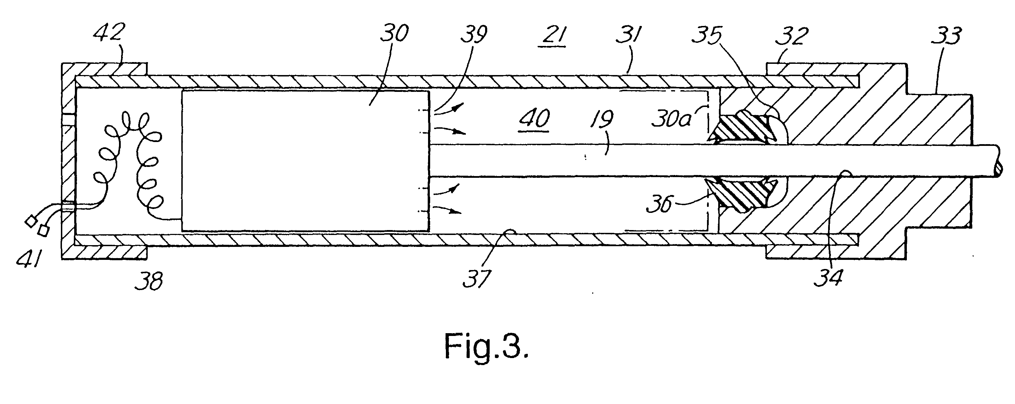

Referring to Figure 3, the pyrotechnic force generator 21 comprises a tube 31 with a sealed lower end cap 32 designed with a lower spigot 33 received by the intermediate housing part 3 of the actuator. The end cap 32 has an axial bore 34 which opens out into the interior of the tube 31 via a shaped recess 35. The recess 35 houses a snap fit annular seal moulding 36 through which the connecting cable 19 passes. The seal 36 thereby provides a gas-tight passage for the cable 19. In the normal inactivated position of the actuator piston 30 the inward end thereof rests against the seal in a manner which urges the inner end of the seal into close contact with the cable as represented by the pecked outline in Figure 3. The piston 36 is freely slidable in the bore 37 of the tube 31 and houses an electrically detonated pyrotechnic device (not shown) which when detonated by an electric circuit via a flexible cable 38 results in rapid expansion of gas via outlets 39, into the chamber 40 between the piston and the cap 32. Access for electric connections 41 to the pyrotechnic device is provided through a vented end cap 42 as shown.

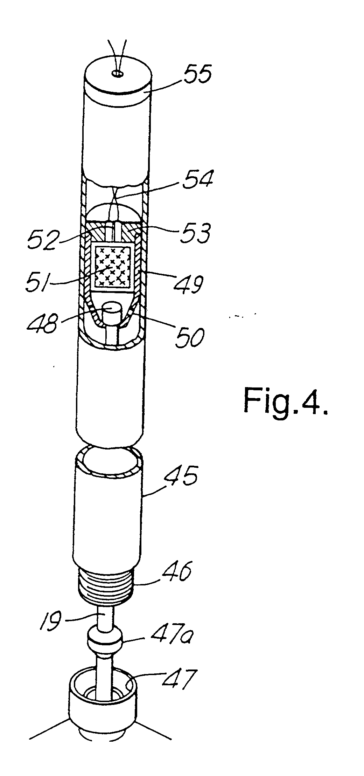

Referring to Figure 4, the force generator shown therein is also designed to attach to a retractor housing part such as 3 of Figure 1. A cylindrical body 45 has a threaded lower end 46 designed to be received by an attachment collar 47 of the actuator housing which traps a resilient seal 48 through which the cable 19 passes. The upper end of the cable 19 carried a crimp 48 which retains it in a pressed steel piston shell 49 having gas discharge apertures 50 at its lower end. The piston shell 49 is a sliding fit within the bore of the body 45 and carried within it a pyrotechnic capsule 51 and an electrical igniter 52 contained in an upper end cap 53 of the piston. Electric wires 54 extend from the end cap 53 outwardly through a vented top cover 55 of the actuator cylindrical body 45. The wires 54 are of sufficient length to permit the piston shell 49 to normally rest near the lower end of the cylindrical body 45. When the igniter 52 is activated by an electric current via wires 54, the pyrotechnic rapidly releases gas which is communicated via apertures 50 to the region below the piston, thereby driving the piston 49 and the cable 19 upwards to pretension the retractor reel as described in the following.

In operation of the retractor, after being seated an occupant withdraws the seat belt webbing (not shown) and secures the belt in an operative condition by inserting the buckle tongue (not shown) into a buckle (not shown) in the usual manner. The belt is then retained comfortably for the occupant by the spring 1. In the event of predetermined webbing acceleration or vehicle deceleration limits being exceeded the normal emergency retractor locking mechanism (not shown) comes into operation and the reel is locked against withdrawal of seat belt webbing. In the event of a yet higher vehicle deceleration limit (which is indicative of a crash) being exceeded, the pyrotechnic actuator is detonated via electrical connections from an electro mechanical sensor (not shown) and the cable 19 is tensioned such that pins 12 are sheared by the resultant rotation of clutch drum 18 in the direction of arrow 22. Following this shearing of pins 12 the internal cam surfaces 17 of the clutch drum 18 drive the rollers 15 generally radially inwards. The pins 14 are thereby also sheared and enabling the rollers 15 to be trapped in locking position between the cam surfaces 17 and the outer surface of part 10 thereby rotationally driving the webbing reel in the direction of arrow 22 namely in a sense to tighten the belt webbing about the occupant in advance of development of a serious crash condition.

By virtue of the clutch components 14 and 15 being located by normally fixed albeit frangible pins 12 and 14, manual or automatic assembly can be simple. Moreover, no freely movable parts are added to a retractor mechanism which may become dislodged in normal use to interfere with the free running of the retractor. Only on an imminent crash condition occurring are the pins 12 and 14 sheared to permit pretensioning operation. Following such pretensioning, subsequent high tension which may occur in the seat belt as a result of the crash is then contained by the retractor locking components (not shown) and not transferred back to the clutch drum 14 or cable 19.

To improve the transmission of force from the force generator 21 to the reel 4 the friction coefficients in the clutch may be increased. This can be achieved in a number of ways. An example would be to provide rough and/or knurled surfaces on the rollers 15 the cylindrical part 10 and/or the arcuate surfaces 16.

The drum 18 may be made of plastics material since the bursting forces applied thereto by the interaction of the arcuate surfaces 16 with the rollers 15 may be effectively resisted by the crushing force of the cable 19 wrapped around the drum 18.

## Claims

1. A seat belt retractor comprising a frame, a belt reel (4)rotatable in bearings (8), first means (1) normally operable in a sense to rotate the reel (4) in a belt rewinding direction, locking means operable to inhibit withdrawal of the belt in the event of an emergency, and a pretensioning actuator (21), with coupling means, operable in the event of a crash to further rotate the reel in a rewinding direction to pretension the belt, the pretensioning actuator comprises a pyrotechnic force generator (21) having a cylinder (31, 45) and a piston (36, 49) freely slidable in the cylinder (31, 45), the piston (36, 49) housing a pyrotechnic device which, when detonated releases gas into the cylinder (31, 45) and thus drives the piston (36) along the cylinder (31, 45) in a belt tightening direction characterised in that the cylinder (31, 45) has one end (46) outwardly threaded and adapted to be received in an attachment collar (32, 47)for connection with the retractor frame, wherein the collar (47) comprises an end cap (32) which has surfaces abutting against both the inwardly and the outwardly facing sides of the cylinder (31, 45) at said one end (46).

2. A seat belt retractor according to claim 1, wherein the pyrotechnic gas generator (21) is electrically detonatable.

3. A seat belt retractor according to claim 1 or 2 wherein one end of the cylinder (31, 45) is sealed and the other end is formed of a vented end cap (55).

4. A seat belt retractor according to claim 3 comprising electrical connections (54) to the pyrotechnic device (51) which pass through the vented end cap (55).

5. A seat belt retractor according to any preceding claim comprising a cable (19) crimped at one end to the piston (49) and fixed at the other end to belt withdrawal means.

## Patentansprüche

1. Aufrollvorrichtung für einen Sicherheitsgurt, die folgendes aufweist: einen Rahmen, eine Gurtspule (4), die in Lagern (8) drehbar ist, erste Mittel (1), die normalerweise in dem Sinn betriebsfähig sind, die Rolle (4) in einer Gurt-Aufrollrichtung zu drehen, Verriegelungsmittel, die betriebsfähig sind, um das Abziehen des Gurtes im Fall einer Notsituation verhindern, und ein Vorspann-Betätigungsglied (21) mit Kopplungsmitteln, das im Fall eines Crashs betriebsfähig ist, um die Spule weiter in einer Aufrollrichtung zu drehen, um den Gurt vorzuspannen, wobei das Vorspann-Betätigungsglied einen pyrotechnischen Krafterzeuger (21) umfaßt, der einen Zylinder (31, 45) und einen Kolben (36, 49) hat, der frei im Zylinder (31, 45) gleiten kann, wobei der Kolben (36, 49) eine pyrotechnische Einrichtung aufnimmt, die bei der Zündung Gas in den Zylinder (31, 45) freisetzt und folglich den Kolben (36) längs des Zylinders (31, 45) in einer Gurtstraffungsrichtung antreibt, dadurch gekennzeichnet, daß der Zylinder (31, 45) ein Ende (46) hat, das Außengewinde hat und in einem Befestigungsbund (32, 47) zur Verbindung mit dem Rahmen der Aufrollvorrichtung aufgenommen werden kann, worin der Bund (47) einen Abschlußdeckel (32) hat, der Flächen hat, die an dem genannten einen Ende (46) sowohl an den nach innen als auch den nach außen zeigenden Seiten des Zylinders (31, 45) anliegen.

2. Aufrollvorrichtung für einen Sicherheitsgurt nach Anspruch 1, bei welcher der pyrotechnische Gaserzeuger (21) elektrisch gezündet werden kann.

3. Aufrollvorrichtung für einen Sicherheitsgurt nach Anspruch 1 oder 2, bei der ein Ende des Zylinders (31, 45) luftdicht abgeschlossen ist und das andere Ende mit einem belüfteten Abschlußdeckel (55) gebildet wird.

4. Aufrollvorrichtung für einen Sicherheitsgurt nach Anspruch 3, die elektrische Anschlüsse (54) zu der pyrotechnischen Vorrichtung (51) aufweist, die durch den belüfteten Abschlußdeckel (55) führen.

5. Aufrollvorrichtung für einen Sicherheitsgurt nach einem der vorhergehenden Ansprüche, die ein Kabel (19) aufweist, das an einem Ende an den Kolben (49) gepreßt ist und am anderen Ende an den Gurtabziehmitteln befestigt ist.

## Revendications

1. Enrouleur de ceinture de sécurité comprenant un châssis, un dévidoir de la ceinture (4) pouvant tourner dans des paliers (8), un premier moyen (1) pouvant normalement être actionné pour faire tourner le dévidoir (4) dans une direction de réenroulement de la ceinture, un moyen de verrouillage destiné à empêcher la sortie de la ceinture en cas d'urgence, et un dispositif d'actionnement de prétension (21), avec un moyen de couplage, destiné à poursuivre en cas d'une collision la rotation du dévidoir dans une direction de réenroulement pour prétendre la ceinture, le dispositif d'actionnement de prétension comprenant un générateur de force pyrotechnique (21) comportant un cylindre (31, 45) et un piston (36, 49), pouvant glisser librement dans le cylindre (31, 45), le piston (36, 49) servant au logement d'un dispositif pyrotechnique, dégageant du gaz dans le cylindre (31, 45) lors de son déclenchement, entraînant ainsi le piston (36) le long du cylindre (31, 45), dans une direction de serrage de la ceinture, caractérisé en ce que le cylindre (31, 45) comporte une extrémité (46) filetée vers l'extérieur et destinée à être reçue dans un collier de fixation (32, 47) en vue de la connexion au châssis de l'enrouleur, le collier (47) comprenant un capuchon d'extrémité (32) comportant des surfaces butant contre les côtés orientés vers l'intérieur et vers l'extérieur du cylindre (31, 45) au niveau de ladite une extrémité (46).

2. Enrouleur de ceinture de sécurité selon la revendication 1, dans lequel le générateur de gaz pyrotechnique (21) peut être déclenché électriquement.

3. Enrouleur de ceinture de sécurité selon les revendications 1 ou 2, dans lequel une extrémité du cylindre (31, 45) est scellée, l'autre extrémité ayant la forme d'un capuchon d'extrémité à évent (55).

4. Enrouleur de ceinture de sécurité selon la revendication 3, comprenant des connexions électriques (54) du dispositif pyrotechnique (51), traversant le capuchon d'extrémité à évent (55).

5. Enrouleur de ceinture de sécurité selon l'une quelconque des revendications précédentes, comprenant un câble (19) serti au niveau d'une extrémité au piston (49) et fixé au niveau de l'autre extrémité à un moyen de sortie de la ceinture.
